(19) **Europäisches Patentamt**
**European Patent Office**
**Office européen des brevets**

(11) **EP 2 436 264 A1**

(12) **EUROPEAN PATENT APPLICATION**

(43) Date of publication:
04.04.2012 Bulletin 2012/14

(21) Application number: 11009700.3

(22) Date of filing: 11.10.2007

(51) Int Cl.:
*A01M 1/14* (2006.01) *A01M 1/02* (2006.01)
*A01M 1/20* (2006.01) *A01N 25/34* (2006.01)
*A01N 51/00* (2006.01) *A01N 65/00* (2009.01)
*A01P 19/00* (2006.01)

(84) Designated Contracting States:
AT BE BG CH CY CZ DE DK EE ES FI FR GB GR
HU IE IS IT LI LT LU LV MC MT NL PL PT RO SE
SI SK TR

(30) Priority: 21.11.2006 JP 2006314632
27.11.2006 JP 2006318663

(62) Document number(s) of the earlier application(s) in
accordance with Art. 76 EPC:
07829618.3 / 2 084 963

(71) Applicant: **Earth Chemical Co., Ltd.**
**Chiyoda-ku**
**Tokyo 101-0048 (JP)**

(72) Inventors:
• **Yoshida, Shinya**
**Ako city Hyogo (JP)**
• **Tatami, Kenji**
**Ako city Hyogo (JP)**
• **Takahashi, Nobuharu**
**Ako city Hyogo (JP)**
• **Yui, Risa**
**Ako city Hyogo (JP)**

(74) Representative: **Grünecker, Kinkeldey,**
**Stockmair & Schwanhäusser**
**Anwaltssozietät**
**Leopoldstrasse 4**
**80802 München (DE)**

Remarks:
This application was filed on 08-12-2011 as a
divisional application to the application mentioned
under INID code 62.

(54) **Device and method for capturing pest insect**

(57) The invention is to provide a harmful insect capturing trap (50) and a harmful insect capturing method capable of efficiently capturing and/or controlling a harmful insect attracted into a container (51).

The present invention provides a harmful insect trap (50) comprising a container (51) having an aperture (56), and a plurality of gel bodies (54) contained in the container (51) in a layered state and containing a harmful insect attractant (60),

wherein a gap enabling entry of the harmful insect is formed between the gel bodies in the layered state.

**EP 2 436 264 A1**

**Description**

TECHNICAL FIELD

The present invention relates to a harmful insect capturing trap and a harmful insect capturing method for capturing and/or controlling harmful insects such as flies and drosophilae etc. by attracting into a container.

BACKGROUND ART

As a prior harmful insect controlling apparatus, there is used one that diffuses an insecticide component to the ambient atmosphere. Such apparatuses include one utilizing an electric power and one utilizing a heat-generating substance.

On the other hand, used is a harmful insect capturing trap having a container, which contains therein a liquid containing a harmful insect attractant. Such harmful insect trap releases, at the use thereof, the harmful insect attractant to the ambient atmosphere from an aperture provided in the container. Thus, the harmful insect attracted by the harmful insect attractant enters the container through the aperture, and is immersed in the harmful insect attractant liquid and is drowned to death or killed by an insecticide used in combination. (Patent Document 1).

Also proposed is a trap for capturing a fly, by sticking to a sticky capturing site formed by a sticky net or a sticky adhesive layer (Patent Document 2)

Patent Document 1: JP-A-2003-70403

Patent Document 2: JP-A-2002-142643

DISCLOSURE OF THE INVENTION

PROBLEMS TO BE SOLVED BY THE INVENTION

However, in Patent Document 1, such trap involves a problem that the handling is difficult and the content tends to leak, as the attractant is liquid. Further it is difficult to capture harmful insects, and a capturing tool such as a sticky sheet is required in addition. Furthermore, in a capturing trap equipped with an attractant liquid as shown in Patent Document 2, a sticky sheet or a sticky capturing site has a drawback that, even when the harmful insect perches thereon, since only fine hairs or claws of the legs of the insect are in contact, a sufficient capturing force cannot be obtained and the insect may escape therefrom.

In consideration of the foregoing, an object of the present invention is to provide a harmful insect capturing trap capable of efficiently capturing and/or controlling the harmful insect attracted into the container.

MEANS FOR SOLVING THE PROBLEMS

The present invention relates to a harmful insect capturing trap and a harmful insect capturing method as described in the following:

(1) a harmful insect trap comprising:

a container having an aperture; and
a plurality of gel bodies contained in a layered form in the container and containing a harmful insect attractant,

wherein a gap allowing entry of the harmful insect is formed between the gel bodies in the layered state.

(2) a harmful insect trap comprising:

a container having an aperture;
a harmful insect attractant member contained in the container and containing a harmful insect attractant; and
a plurality of gel bodies contained in a layered form between the aperture and the harmful insect attractant agent in the container,

wherein a gap allowing entry of the harmful insect is formed between the gel bodies in the layered state.

(3) The harmful insect trap according to (1) or (2), wherein the gel body has a size of from 5 to 25 mm.

(4) The harmful insect trap according to any one of (1) to (3), wherein the number of the gel bodies is from 50 to 200/100 cm$^3$.

(5) A method of capturing a harmful insect by gel bodies, which comprises containing a plurality of gel bodies in a container having an aperture on at least a surface thereof, forming a gel body layer having a gap between the gel bodies, and causing the harmful insect to enter the interior of the gel body layer and to be incapable of turning back, thereby capturing the harmful insect.

(6) A method of capturing a harmful insect with gel bodies, which comprises containing a harmful insect attractant member and a plurality of gel bodies in a container having an aperture on at least a surface thereof, forming a gel body layer having a gap between the gel bodies between the aperture and the harmful insect attractant member, and positioning the gel body layer in a path of the harmful insect, entering from the aperture, toward the harmful insect attractant member, thereby capturing the harmful insect.

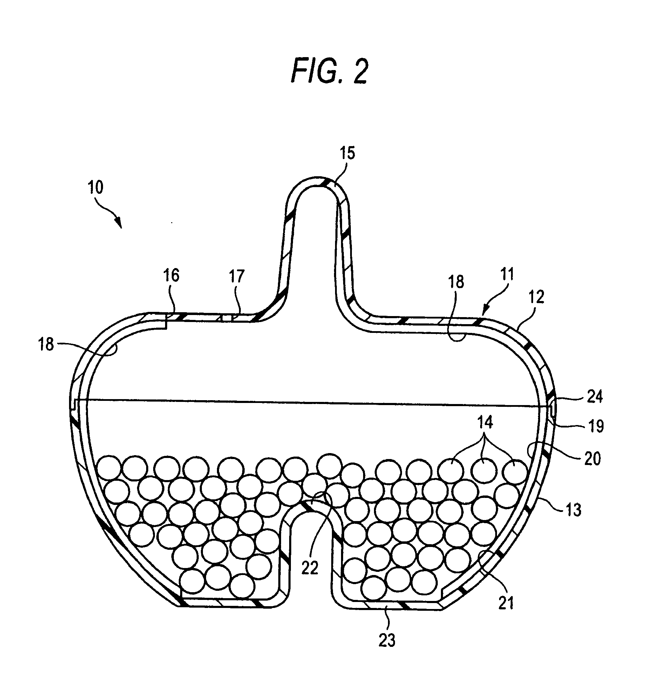

In the harmful insect trap of the present invention, the container contains a plurality of gel bodies in a layered form. The layered form means, as illustrated in Fig. 2 to be explained layer, a state that a plurality of gel bodies is stacked upward in the container (upward direction in Fig. 2). The number of the gel body layers is preferably three or more layers. An excessively few number of the gel body layers results in a possibility that the once entered harmful insect may escape. The gel body layers a number within the above-mentioned range are preferable as the harmful insect is prevented from turning back, also a harmful insect capturing effect can be provided to the gel body itself and such effect is not saturated. In an embodiment to be described later with reference to Fig. 2, the number of the gel body layers is six layers.

Between the gel bodies in the container, a gap allowing entry of the harmful insect (hereinafter also simply referred to gap) into a deep portion (bottom portion) of the container is formed. Such gap is variable depending on the size of the harmful insect, but, is preferably from 2 to 5 mm for the flies and drosophilae, and from 5 to 10 mm for the ants, wood louses, sow bugs and cockroaches etc. The gap can be regulated for example by changing the size (for example volume or length) of the gel bodies or by regulating the contained state of the gel bodies in the container.

The gel body to be contained in the harmful insect trap of the present invention is not particularly restricted so far as it has a liquid absorbing property and is capable of a gel. The gel body may have a fixed shape such as a spherical shape, a rod shape, a cubic shape or a rectangular parallelepiped shape, a similar shape thereto, a polygonal shape or an amorphous shape such as a fragmental shape, but it is important that the gel bodies are so contained as to form a gap allowing entry of the harmful insect into a deep part of the container. Also the gel bodies may be of a uniform shape or may be a mixture of different sizes.

The gel body may be prepared by immersing a liquid-absorbent polymer in a harmful insect attractant in a liquid state and by absorbing it to a saturation amount to cause swelling thereby forming a gel, or prepared by forming a gel of a harmful insect attractant with a gelling agent such as agar or carrageenan etc., and crushing it into a desired size (called crushed gel).

In particular, a gel body prepared from a liquid-absorbent polymer, showing an excellent capturing effect when coming into a wing, a leg or a body surface of the harmful insect, is preferable in relation to the function and effect of the present invention. The gel body prepared from the liquid-absorbent polymer showing an excellent capturing effect is for example a gel body exhibiting a high stickiness on the surface thereof.

The size of the gel body is, in case of capturing flies and drosophilae, preferably from 5 to 25 mm, more preferably from 10 to 15 mm. The size of the gel body within such range allows to facilitate entry of the harmful insect into the deep part of the container and to render the escape difficult, thereby achieving efficient capture and/or control of the insect. The size of the gel body means a diameter in case of a spherical shape, or a longitudinal length in case of a rod shape or a rectangular parallelepiped (or cubic) shape. Also the gel bodies of different sizes may be used in combination so far as within the aforementioned range. For example, the gel bodies may be layered with a gradient in the size from a larger one to a smaller one.

In the harmful insect trap of the present invention, the number of gel bodies contained in the container is preferably from 15 to 600 units/100 cm$^3$, more preferably from 50 to 200 units/100 cm$^3$. Within such range, an optimum gap is formed between the gel bodies to enable more efficient capture and/or control of the harmful insect. Besides, the distance of the gel bodies in the container is preferably 10 mm or less, and more preferably 5 mm or less. Such range enables to form a gap allowing entry of the harmful insect.

Also the filling depth of the gel bodies in the container is preferably 1.5 cm or more, more preferably 2.5 cm or more. An excessively shallow depth is difficult to generate a concentration gradient of the harmful insect attractant and may facilitate escaping of the harmful insect.

The gel body in the present invention can be prepared, for example, by immersing a liquid-absorbent polymer in a harmful insect attractant of a liquid state to cause swelling by absorption to saturation and crushing or cutting the obtained gel block for example by a scraper to a desired size thereby obtaining gel bodies (crushed gel). In the case that the liquid-absorbent polymer has a particulate-forming property, the gel body may be obtained by causing a swelling with the harmful insect attractant.

The liquid-absorbent polymer may be a hydrophilic polymer or an oleophilic polymer, and examples thereof include a hydrolysate of a starch-acrylonitrile graft polymer, a crosslinked substance of a starch-sodium acrylate graft polymer, a polyacrylic acid copolymer, a crosslinked substance of sodium polyacrylate, a crosslinked substance of an isobutylene-maleic acid copolymer or a salt thereof, a crosslinked substance of a polyvinyl alcohol-sodium acrylate graft polymer, a salt of a crosslinked substance of a polyvinyl acetate-ethylenic unsaturated carboxylic acid copolymer, a crosslinked polymer of long-chain alkyl acrylate, polysorbornene, an alkylstyrene-divinylbenzene copolymer, a methacrylate-based crosslinked copolymer, and a denatured alkylene oxide etc.
More preferable examples include a crosslinked substance of a partial sodium salt of an acrylic acid polymer, and a polyacrylic acid copolymer etc., of which specific examples include Aquacalk TWB (manufactured by Sumitomo Seika Co.), and Asco Hisobead (manufactured by Aekyung Specialty Chemicals Co., Ltd.).

Also the gel body may be obtained by preparing a gel composition containing a harmful insect attractant by a gelling agent, followed by a crushing to a desired size as described above (crushed gel). The gelling agent is preferably a water-soluble polysaccharide such as agar, carrageenan, or gellan gum etc.

Examples of the harmful insect attractant to be used in the present invention include Shaoxing wine, beer, wine, acetoin, black vinegar, red vinegar, vinegar, various fruit extracts, fermented vegetable or fruit, miso (fermented soybean paste), yeast, honey, liquid sugar syrup, brown sugar, sugar and various vegetable-type or animal-type feeds etc.

It is also possible to provide an insecticidal effect by adding an insecticide component within an extent not affecting the attractant property. Examples which can be used as the insecticide include a pyrethroid compound such as chrysanthemum cinerariaefolium extract, natural pyrethrin, prarethrin, imiprothrin, phthalthrin, allethrin, transfluthrin, resmethrin, phenothrin, cyphenothrin, permethrin, cypermethrin, etofenprox, cyfluthrin, deltamethrin, biphenthrin, fenvalerate, fenpropathrin, empenthrin, silafluophen, methofluthrin or profluthrin etc., an organic phosphorus compound such as fenitrothion, diazinone, malathion, pyridafenthion, prothiophos, phoxim, chloropyriphos, or dichlorvos etc., a carbamate type compound such as carbaryl, propoxur, methomyl, or thiodicarb etc., an oxadiazole type compound such as methoxadiazone etc., a phenylpyrazole type compound such as fipronil etc., a sulfonamide type compound such as amidoflumet etc., a neonicotinoid type compound such as dinotefuran, or imidacloprid, or an insect growth control agent such as methoprene, hydroprene or pyriproxyfen etc., along with insecticidal essential oils including orange oil, peppermint, benzyl alcohol etc. as the insecticide component. Among these insecticide components, dinotefuran which is a water-soluble insecticide is preferable, as water is used in preparing the gel bodies. Dinotefuran is a water-soluble insecticide and can be used without a surfactant or an organic solvent. Accordingly it is advantageous to prevent a problem of repellant by the insect.
The content of the insecticide in the gel body is preferably from 0.01 to 0.5% by mass. As a specific example, in case of employing dinotefuran, the content is preferably from 0.05 to 0.2% by mass.
In case of adding the insecticide, it may be included in the same gel body containing the harmful insect attractant, or it may be included in a gel body other than that containing the harmful insect attractant or in another particulate member to form a two-component system.

In addition, in order to hinder the movement of the flying harmful insect (by wetting the wings to incapacitate mobility) and to kill the insect by capturing, a viscous component such as polybutene, natural rubber, guar gum, xanthane gum, starch or saccharoids etc. may be used in combination to impart a high viscosity to a surface of the agent. The capturing ability can be further increased in this manner.

In the present invention, water is normally contained as a solvent in addition to the above-described components, and other components may be added suitably so far as the attractant property is not hindered.
Examples of such other components include an accidental ingestion aversive agent, an antiseptic agent, a pH adjuster, a stabilizing agent, a dye and a fragrance etc.
Examples of the accidental ingestion aversive agent include denatonium benzoate (trade name: Bitrex) and red pepper essence etc.
Examples of the antiseptic agent include quaternary ammonium salt such as cetylpyridinium chloride or the like, potassium sorbate and paraben etc.
Examples of the pH adjuster include citric acid or phosphoric aid and salts thereof etc.
Examples of the stabilizing agent include butylated hydroxytoluene (BHT) and butylated hydroxyanisole (BHA) etc.
Examples of the dye include various dyes of red, blue, yellow, green, black or brown color etc.
Examples of the fragrance include those of melon, vanilla, strawberry, mango, apple, pear, banana or durian etc.
Also addition of trimethylglycine as water retention agent is preferable as it can suppress water evaporation from the gel thereby retaining the water in the gel over a prolonged period and maintaining the effect of attraction and capture. The content of trimethylglycine is preferably from 0.1 to 10% by mass.

In the harmful insect trap of the present invention, a light-emitting member may be used in combination, in order to increase the attractant ability to the harmful insect. Specific examples include addition of a fluorescent material or a phosphorescent material in the gel body together with the harmful insect attractant thereby emitting light from the gel body, or coating a fluorescent material or a phosphorescent material on the internal or external surface of the container thereby emitting light from the container itself.

In the foregoing, there has been explained an embodiment of filling the gel bodies only, but it is also possible to mix a particulate member other than the gel body. This method can increase the number of layers of the gel bodies. Also this method is useful, by selecting a material lighter than the gel body, in case of utilizing the harmful insect trap in a hanging state. Examples of such particulate member include a cellulose particle and a pulp particle etc.

The harmful insect trap of the present invention is not particularly restricted in the producing method therefor. For example, in the case the gelling agent is a water-soluble polysaccharide such as agar, a gel composition containing the aforementioned components may be prepared into a desired size by crushing or cutting by a scraper or the like (crushed gel) and directly filled in the main body of the container. On the other hand, in the case of utilizing a liquid-absorbent polymer, a crushed gel composition may be filled as in the case of the water-soluble polysaccharide. There may be employed a method of filling a liquid-absorbent polymer of granular-body-forming property in advance in the container and then pouring a liquid composition other than the liquid-absorbent polymer, alternatively a method of filling the liquid composition other than the liquid-absorbent polymer in advance in the container and then adding the liquid-absorbent polymer therein, thereby causing the polymer to impregnate and swell.

Besides, the capturing ability can be further improved by splashing a viscous liquid onto the gel body layer.

The harmful insect trap of the present invention is capable of efficiently capture various indoor and outdoor harmful insects. It is particularly effective to flying harmful insects, such as Drosophila melanogaster, D. hydei, D. virilis, D. immigrans, Phoridae, D. simulans, Musca domestica, Lucilini and Calliphorini etc. It is also effective to other flying harmful insects such as mosquito and bees etc. It is also effective to crawling harmful insects such as wood louses, sow bugs, cockroach, flea, mite and ant etc.

Now an embodiment of the harmful insect capturing method of the present invention will be described.

In the harmful insect capturing method of the present invention, the harmful insect entering through the aperture is, in the course of crawling into the interior of the gel body layer, captured by the gel bodies by the aforementioned function. The harmful insect attractant can be utilized for causing the harmful insect to crawl into the interior of the gel body layer. Thus, the harmful insect can be captured by the presence of the gel body layer in the course of the harmful insect from the aperture to the attractant.

According to the harmful insect capturing method of the present invention, the harmful insect attractant may be contained in the gel bodies as in the aforementioned harmful insect trap of the present invention, or not contained in the gel bodies but is provided as a separate preparation within the gel body layer or in a deep portion. In such case, the position of the aperture in the container may be selected according to the position of the attractant. The gel body layer can be formed by filling the gel bodies between the aperture and the position of the harmful insect attractant.

In the case that the aperture is formed on an upper surface of the container, the attractant is placed in a lower part of the container. The attractant may be contained in the gel bodies thereby generating a concentration gradient by the gravity, or it is also possible to place a carrier, containing the attractant, in the bottom portion of the container and to fill the gel bodies thereon. Such method is particularly effective for flying harmful insects such as drosophilae.

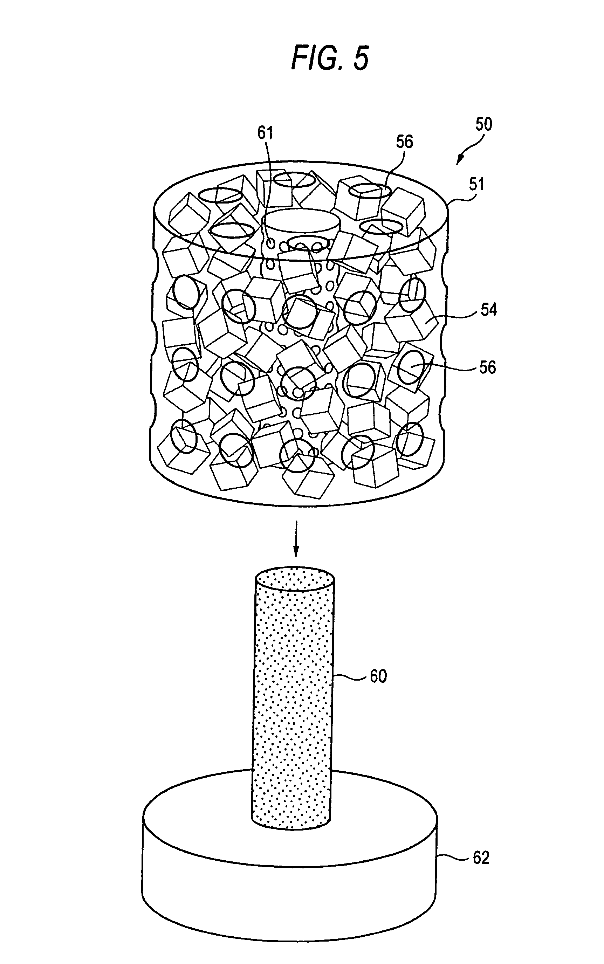

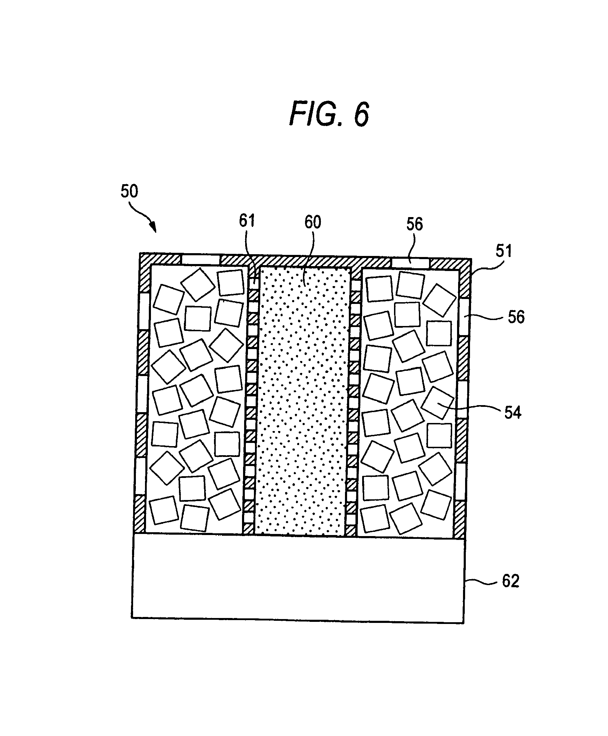

Also in the case that the aperture is formed on a lateral face (peripheral wall) of the container, it is possible to place a carrier containing the attractant (harmful insect attractant member) in a central part of the container and to place the gel bodies therearound, as illustrated in Figs. 5 and 6 to be explained later. Such method is effective for flying harmful insects such as drosophilae and for crawling harmful insects such as cockroach etc.

ADVANTAGE OF THE INVENTION

In the harmful insect trap of the present invention, as a plurality of gel bodies is placed in a layered state, the concentration of the harmful insect attractant becomes higher in a deeper (lower) portion of the layer by the action of gravity, thereby generating a concentration gradient. As the gel bodies therebetween have a gap allowing entry of the harmful insect, the harmful insect tries to enter the deeper part of the container, where the attractant is present in a higher concentration. The harmful insect, as entering the deeper part, becomes unable to turn back and becomes immobilized by the contact of the wing or the body surface with the surface of the gel bodies, thereby captured and/or controlled very easily.

In another harmful insect trap of the present invention, a plurality of the gel bodies, contained in a layered state in the container, is positioned between the aperture of the container and the harmful insect attractant member, and the gel bodies have therebetween a gap allowing entry of the harmful insect, so that the gel body layer is present in the moving course of the harmful insect from the aperture to the harmful insect attractant member. The harmful insect, as approaching the harmful insect attractant member, becomes unable to turn back and becomes immobilized by the contact of the wing or the body surface with the surface of the gel bodies, thereby captured and/or controlled very easily.

Thus, in the harmful insect trap of the present invention, the gel body itself has a function of capturing and/or controlling the harmful insect.

BRIEF DESCRIPTION OF THE DRAWINGS

Fig. 1 is an external perspective view, seen from obliquely above, of a harmful insect trap constituting an embodiment of the present invention.

Fig. 2 is a vertical cross-sectional view of the harmful insect trap shown in Fig. 1.

Fig. 3 is an external perspective view, seen from obliquely above, of a main body employed in the harmful insect trap shown in Fig. 1.

Fig. 4 is an external perspective view, seen from obliquely below, of a cover member employed in the harmful insect trap shown in Fig. 1.

Fig. 5 is an exploded external perspective view, seen from obliquely above, of a harmful insect trap constituting another embodiment of the present invention.

Fig. 6 is a schematic sectional view of the harmful insect trap of Fig. 5.

DESCRIPTION OF REFERENCE NUMERALS

10, 50:     harmful insect trap

11, 51:     container

12:         cover member

13:         main body

14, 54:     gel body

15:         protruded part

16, 56:     larger aperture (aperture)

17:         smaller aperture (aperture)

18:         cover member-side protruded part (linear protruded part)

20:         main body-side protruded part (linear protruded part)

22:         lifted part

60:         harmful insect attractant member

61:         aperture

62:         support member

BEST MODE FOR CARRYING OUT THE INVENTION

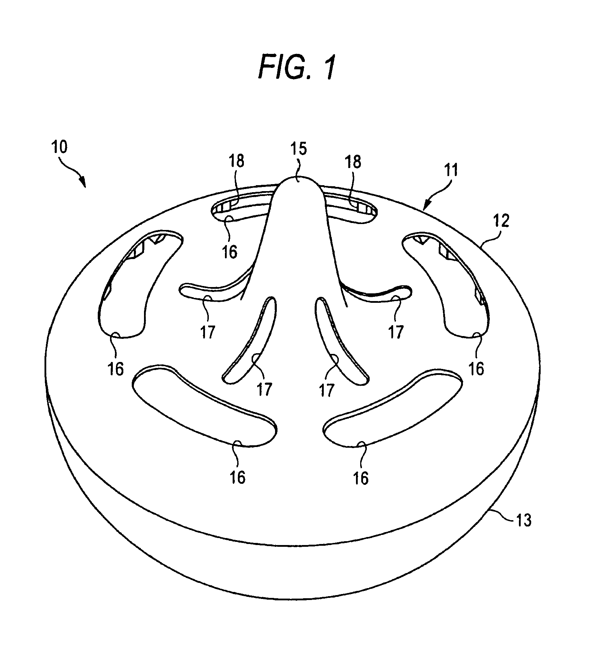

In the following, an embodiment of the harmful insect trap of the present invention will be explained with reference to the accompanying drawings.
As illustrated in Fig. 1, a harmful insect trap 10 constituting an embodiment of the present invention is constituted of a container 11, including a cover member 12 and a main body 13, and gel bodies 14 containing a harmful insect attractant.

In the harmful insect trap of the present invention, a plurality of gel bodies 14 is contained in a layered state, in the container 11 (main body 13). In the embodiment illustrated in Fig. 2, the number of the gel body layers is six layers. Between the gel bodies 14, formed is a gap allowing entry of the harmful insect into a deep portion of the container 11 (bottom portion of the main body 13). In the cover member 12, five larger apertures 16 are formed between a protruded part 15 and an external brim, equidistantly along the circumferential direction, and five smaller apertures 17 are formed equidistantly around the protruded part 15. The cover member 12 can promote gathering of the flying harmful insects on the cover member and further promote entering into the interior through the aperture, utilizing the habit of the flying harmful insect to like a dome shape. The number and the size of the aperture of the cover member 12 are not particularly restricted so far as the harmful insect can enter the container 11. Also the external surface of the container 11 is preferably colored in a warm color such as red, brown or orange etc., and subjected to an embossing in order to further improve the attractant property. Also the shape of the main body 13 is not particularly restricted so far as the gel bodies, to be explained later, can be accommodated. For example, a pointed form of the bottom part of the main body 13 allows to place the harmful insect trap by piercing into the ground, thus being useful for agricultural and horticultural purposes. Also a pressure-sensitive adhesive tape or a pressure-sensitive adhesive material may be provided according to the placing position, thereby enabling fixation to a wall, a floor or a pillar etc.

As illustrated in Fig. 2, a lifted part 22 is provided in a protruded state at the center, and the lifted part 22 has a function of avoiding an unnecessary increase in the amount of the gel bodies 14 contained in the main body 13 thereby avoiding waste of the gel bodies 14, and a function of increasing the depth thereby facilitating formation of the concentration gradient in the attractant contained in the gel bodies 14. The lifted part 22 further preferably projects upwards from the surface of the gel bodies 14, thus further serving to provide the flying harmful insect with a perch.

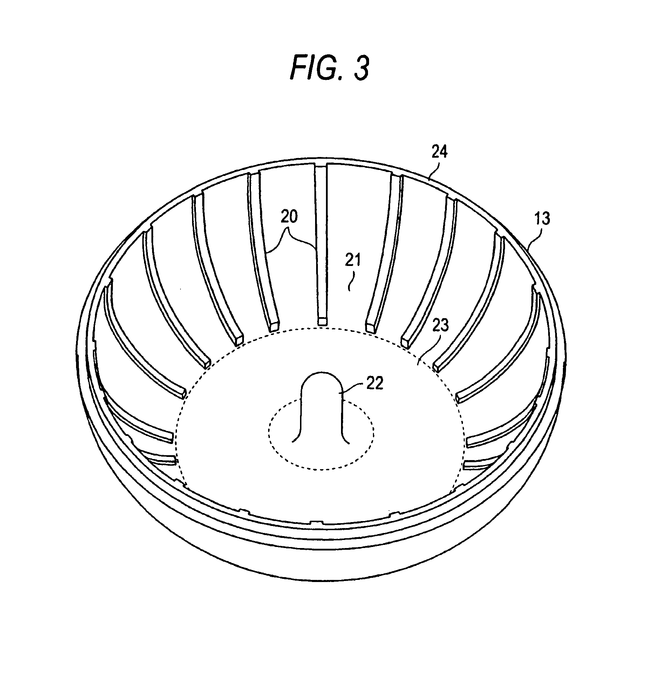

As illustrated in Fig. 3, The main body 13 has, on the internal surface, plural linear main-body-side protruded parts (linear protruded parts) 20 are formed in a protruded state, equidistantly along the circumferential direction, also has a harmful insect attractant containing part 21 and a lifted part 22 in the bottom part, and has a coupling receiver 24, for assembling with the cover member 12, at an upper end of the outer brim.

The lifted part 22 is formed, at the central portion of the harmful insect attractant containing part 21, in a form similar to that of the protruded part 15 and upwards from the bottom plate 23.

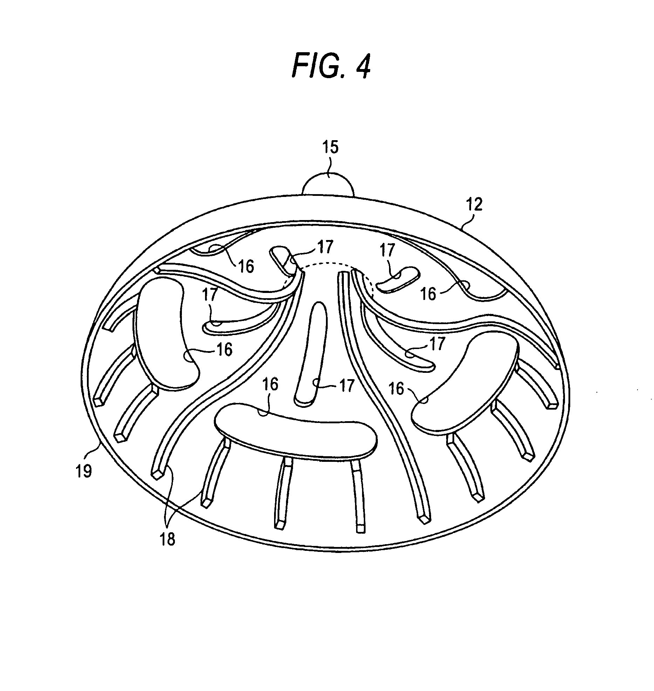

Also as illustrated in Fig. 4, on the internal surface of the cover member 12, plural linear cover-member-side protruded parts (linear protruded parts) 18 may be formed in a protruded state, equidistantly along the circumferential direction.

The cover-member-side protruded parts 18 are formed, with a predetermined height, continuously from the inner surface of the protruded part 15 to the outer brim of the cover member 12 and from the outer side of the larger apertures 16 to the outer brim of the cover member 12. The protruded part 18 has such a function that the flying harmful insects, entering the container 11 through the larger aperture 16 or the smaller aperture 17, can easily gather and perch on and can easily move along. The flying harmful insects entering the container through the aperture gather and perch on the linear protruded part protruded on the internal surface, then walk along the protruded part under attraction deeper by the harmful insect attractant, and, become immobile and dead by the wetting of the wings upon contacting the gel bodies, and by the action of an insecticide when used in combination. Thus, the moving behavior of the flying harmful insect can be effectively utilized for efficiently capturing and controlling the flying harmful insect.

The main-body-side protruded parts 20 are formed, with a height same as that of the cover-member-side protruded part 18 of the cover member 12, continuously from the upper end to the bottom plate 23. The main-body-side protruded part 20 has, when the cover member 12 is assembled with the main body 13, a function that, together with the cover-member-side protruded part 18, the flying harmful insects entering the container 11 can easily gather and perch on and move along.

Figs. 5 and 6 illustrate another embodiment of the harmful insect trap of the present invention. In the present embodiment, the harmful insect trap 50 includes a container 51 having an aperture 56, a harmful insect attractant member 60 contained in the container 51 and containing a harmful insect attractant, and a plurality of gel bodies 54 contained in a layered state between the aperture 56 and the harmful insect attractant member 60. In the embodiment illustrated in Figs. 5 and 6, the number of the gel body layer is about three or four. Between the gel bodies 54, formed is a gap enabling entry of the harmful insect similarly to the harmful insect trap described above. The aperture 56 is formed on a lateral face and on an upper face of the container 51, and has a size smaller than that of the gel body 54, in order to prevent spilling of the gel bodies 54. The container 51 has a recessed portion for accommodating the harmful insect attractant member 60, and, on a lateral face of the recessed portion, plural apertures 61 are formed in order to release the harmful insect attractant, contained in the harmful insect attractant member, to the exterior. The aperture 61 has a size smaller than that of the gel body 54, in order to prevent spilling of the gel bodies 54. The container 51 and the harmful insect attractant member 60 are supported by a support member 62. An insecticide or an attractant may be contained in the gel body 54.

The material of the harmful insect attractant member 60 is not particularly restricted, so far as it can contain and hold the harmful insect attractant component, and examples thereof include porous molded materials such ceramics, non-woven clothes, papers or pulps etc.

In the present embodiment, the harmful insect entering through the aperture 56 is captured and controlled by the presence of the gel body layer in the course toward the harmful insect attractant member 60.

EXAMPLES

Now the present invention will be explained in detail by examples.

<Formulation Examples>

Formulation examples for gel bodies used in a harmful insect capturing trap according to the invention will be explained below.

(Formulation 1)
10% by mass of black vinegar, 10% by mass of Shaoxing wine, 2% by mass of sake lee powders and 1% by mass of melon juice were added and stirred in 50% by mass of water. 8.5% by mass of propylene glycol solution containing 2.5% by mass of carboxymethyl cellulose was further added and stirred. Then, 4.15% by mass of another propylene glycol solution containing 0.15% by mass of magnesium aluminometasilicate was further added and stirred, and 0.15% by mass of aluminum potassium sulfate dissolved by the remainder water was further added and stirred in the solution, so that total amount of the solution became 100 % by mass.
Subsequently, 100 g of crushed gel was manufactured from a gelled solid obtained by solidifying the solution into a form of almost cubic bodies of about 5 mm × 5 mm by an extruder.
(Formulation 2)
10% by mass of wine vinegar, 30% by mass of Shaoxing wine, 1% by mass of melon juice were added in 42.5% by mass of water and the mixture was heated and mixed. Further, a mixture of 1.5% by mass of agar and 15% by mass of sucrose was further added and mixed.
Subsequently, 100 g of crushed gel was manufactured from a gelled solid obtained by solidifying the solution into a form of almost cubic bodies of about 10 mm × 10 mm by an extruder.
(Formulation 3)
20% by mass of black vinegar, 20% by mass of Shaoxing wine, 2% by mass of melon juice were added in 41 % by mass of water and the mixture was heated and mixed. Further, a mixture of 2% by mass of gelatin and 15% by mass of sucrose was further added and mixed.
Subsequently, 100 g of crushed gel was manufactured from a gelled solid obtained by solidifying the solution into a form of almost cubic bodies of about 15 mm × 15 mm by an extruder.
(Formulation 4)
10% by mass of wine vinegar, 20% by mass of Shaoxing wine, 2% by mass of sake lee powders and 15% by mass of sucrose were added in 40% by mass of water and the mixture was heated and mixed.
2% by mass of propylene glycol solution containing 0.5% by mass of gellan gum was further added and then heated and mixed. Furthermore, 0.1% by mass of calcium chloride dissolved by remainder water was further added and stirred in the solution, so that total amount of the solution became 100 % by mass.
Subsequently, 100 g of crushed gel was manufactured from a gelled solid obtained by solidifying the solution into a form of almost cubic bodies of about 20 mm × 20 mm by an extruder.
(Formulation 5)
5% by mass of black vinegar, 20% by mass of wine vinegar, 5% by mass of Shaoxing wine, 1% by mass of sake lee powders and 1% by mass of melon juice were added in 50.5% by mass of water and the mixture was heated and mixed. Further, a mixture of 1% by mass of agar, 1.5% by mass of gelatin and 15% by mass of sucrose was further added and mixed.
Subsequently, 100 g of crushed gel was manufactured from a gelled solid obtained by solidifying the solution into a form of almost cubic bodies of about 25 mm × 25 mm by an extruder.
(Formulation 6)
10% by mass of black vinegar, 5% by mass of wine vinegar, 10% by mass of Shaoxing wine and 2% by mass of sake lee powders were added in 73% by mass of water and stirred. In the solution, 15% by mass of the liquid-absorbent polymer having the particulate-forming property (Aquacalk TWB (manufactured by Sumitomo Seika Co.)) was added and swelled, so that 100 g of gel was manufactured into a form of almost cubic bodies of 10 - 15 mm on each side.
(Formulation 7)
10% by mass of black vinegar, 10% by mass of Shaoxing wine, 0.1% by mass of denatonium benzoate were added in 64.9% by mass of water and stirred. In the solution, 15% by mass of the liquid-absorbent polymer having the particulate-forming property (Aquacalk TWB (manufactured by Sumitomo Seika Co.)) was added and swelled, so that 100 g of gel was manufactured into a form of almost cubic bodies of 10 - 15 mm on each side.

<Test example 1>

Specimens were prepared according to the formulations shown in Table 1. The liquid type was prepared by uniformly mixing the components and was placed in the container. The gel type was prepared by mixing and dissolving glucose and agar in hot water of about 90°C, then mixing remaining components and placing the solution into the container. The gel body type was prepared by impregnating a solution, formed by uniformly mixing the components, in a liquid-absorbent polymer having a particulate-forming property (Aquacalk TWB (manufactured by Sumitomo Seika Co.)) to obtain block-shaped gel bodies having a size of 10 - 15 mm, which were then placed in the container.

Each specimen was subjected to a test by being placed in an amount of 100 g in a plastic container of 6.5 cm × 6.5 cm × 6.0 cm open at the upper part. In the gel body type, about 230 block-shaped gel bodies were used, with about 4 or five gel body layers.

About 30 grown Drosophila melanogasters (male and female mixed) were released in a cubic net cage of 90 cm × 90 cm × 90 cm, and assimilated to the environment. Then the above-described specimens were simultaneously placed in the cage, and the number of capture was measured after 18 hours. The results are also shown in Table 1.

[Table 1]

| blended component (g) | liquid type | gel type | gel body type |
|---|---|---|---|
| black vinegar | 20 | 20 | 20 |
| Shaoxing wine | 11 | 11 | 11 |
| glucose | - | 15 | - |
| agar | - | 1.2 | - |
| liquid-absorbent polymer | - | - | 10 |
| Denatonium Benzoate | 0.01 | 0.01 | 0.01 |
| water | suitable amount | suitable amount | suitable amount |
| total | 100 | 100 | 100 |
| captured number | 0 | 0 | 15 |

Based on the results above, the capture was observed only in the gel body type. Based on the observations during the test and at the end of the test, it was found that the Drosophila melanogaster flying to the gel bodies moved through the gap toward the interior of the gel bodies in the layered state and became immobilized and captured in the deep portion by the function of the gel bodies. Such situation was not observed at all in other specimens.

<Test example 2>

A gel of the formulation shown in Table 2 was prepared. A solution prepared by dissolving glucose and agar in hot water of 90°C was mixed with a mixture of other components, and was solidified at the room temperature. Then it was divided to obtain gel bodies of an approximately cubic form having a side of a size shown in Table 3, and subjected to the test by filling an amount of 100 g in a plastic container of 6.5 cm × 6.5 cm × 6.0 cm open at the upper part.

About 100 grown Drosophila melanogasters (male and female mixed) were released in a cubic net cage of 90 cm × 90 cm × 90 cm, and assimilated to the environment. Then four specimens were arranged in parallel, and the number of capture was measured after 6 hours (size being 5 - 20 mm in the first time, and 10 - 25 mm in the second time). The results are shown in Table 3.

[Table 2]

| blended component | blended amount (g) |
|---|---|
| black vinegar | 20 |
| Shaoxing wine | 11 |
| glucose | 15 |
| agar | 1.2 |
| Bitrex | 0.01 |

(continued)

| blended component | blended amount (g) |
|---|---|
| water | suitable amount |
| total | 100 |

[Table 3]

| size (mm) | | 5 | 10 | 15 | 20 | 25 |
|---|---|---|---|---|---|---|
| captured number | 1st time | 10 | 12 | 26 | 4 | - |
| | 2nd time | - | 32 | 30 | 20 | 7 |

It was found, from these results, that the capture was possible with a gel body size of from 5 to 25 mm, and that the effect was particularly excellent with a size of from 10 to 15 mm.
On the other hand, the captured number was 0 when a gel solid, not formed into gel bodies, was placed in the container. Also the captured number was 0 with a gel body size of 1 mm. The failure in the capture of drosophilae was presumably due to the absence of gap or to a gap too narrow for the entry of harmful insect.

<Test example 3>

Specimens were prepared in the same manner as in the gel body type of Test example 1, except for employing the formulations shown in Table 4. The total amount is maintained constant by regulating the amount of water, according to an increase or a decrease in the amount of trimethylglycine.
Each specimen was filled in a container of a dimension of 8 cm × 8 cm × 5 cm, and placed in a chamber of 80 cm × 80 cm × 150 cm adjusted to temperature/humidity conditions shown in Table 5, and a gel remaining rate was calculated by the following formula:

$$\text{gel remaining rate (\%) = (gel mass/initial gel mass)} \times 100$$

The mass of gel changes with the elapsed days, principally due to evaporation of water from the gel. Thus, the gel remaining rate corresponds to the water remaining rate in the gel. Table 5 shows the relation of the number of elapsed days and the gel remaining rate (%). The test was repeated five times and an average is indicated.
Also the effectiveness of formulations A - D shown in Table 4 was confirmed. At first in a cubic net cage of 90 cm × 90 cm × 90 cm, about 50 grown Drosophila melanogaster (male and female mixed) were released and assimilated to the environment. Then four specimens were arranged in parallel, and the number of capture was measured after 18 hours. The used specimens were one immediately after preparation (0 day elapsed) and one after 14 days under conditions of a temperature of 25°C and a humidity of 75%RH. The results are shown in Table 6.
The capture rate (%) was calculated by the following formula. The test was repeated twice and an average is indicated.

$$\text{capture rate (\%) = (number of capture/number of total supply)} \times 100$$

As the liquid-absorbent polymer, Aquacalk TWB (manufactured by Sumitomo Seika Co.) was used.
[Table 4]

| blended component (%by mass) | formulation A | formulation B | formulation C | formulation D |
|---|---|---|---|---|
| dinotefuran | 0.15 | 0.15 | 0.15 | 0.15 |
| black vinegar | 15.00 | 15.00 | 15.00 | 15.00 |
| Shaoxing wine | 15.00 | 15.00 | 15.00 | 15.00 |
| Denatonium Benzoate | 0.01 | 0.01 | 0.01 | 0.01 |

(continued)

| blended component (%by mass) | formulation A | formulation B | formulation C | formulation D |
|---|---|---|---|---|
| Antiseptic agent | 0.10 | 0.10 | 0.10 | 0.10 |
| trimethylglycine | - | 2.00 | 4.00 | 10.00 |
| fragrance | 0.03 | 0.03 | 0.03 | 0.03 |
| liquid-absorbent polymer water | 10.00 suitable amount | 10.00 suitable amount | 10.00 suitable amount | 10.00 suitable amount |
| total | 100 | 100 | 100 | 100 |

[Table 5]

| number of days | gel remaining rate (%) | | | | | | | | | | | |
|---|---|---|---|---|---|---|---|---|---|---|---|---|
| | 26°C, 70 %RH | | | | 20°C, 55 %RH | | | | 30°C, 60 %RH | | | |
| | formulation A | formulation B | formulation C | formulation D | formulation A | formulation B | formulation C | formulation D | formulation A | formulation B | formulation C | formulation D |
| 0 | 100.0 | 100.0 | 100.0 | 100.0 | 100.0 | 100.0 | 100.0 | 100.0 | 100.0 | 100.0 | 100.0 | 100.0 |
| 4 | 72.6 | 71.3 | 72.6 | 74.8 | 73.8 | 69.1 | 74.9 | 77.0 | 72.8 | 72.5 | 75.7 | 81.3 |
| 7 | 52.6 | 51.5 | 53.8 | 58.0 | 57.8 | 59.0 | 65.1 | 67.8 | 52.2 | 59.7 | 62.6 | 69.1 |
| 11 | 31.8 | 31.5 | 34.3 | 41.5 | 44.3 | 46.8 | 52.7 | 55.4 | 30.9 | 38.5 | 41.7 | 49.7 |
| 14 | 16.6 | 18.5 | 21.9 | 30.3 | 30.4 | 36.1 | 41.7 | 45.8 | 22.0 | 30.3 | 34.0 | 43.7 |
| 18 | 10.6 | 13.5 | 16.8 | 26.4 | 15.4 | 22.6 | 27.3 | 33.7 | 12.2 | 18.2 | 22.4 | 35.2 |
| 21 | 8.6 | 11.9 | 15.3 | 25.2 | 10.7 | 16.2 | 20.9 | 28.0 | 10.3 | 14.6 | 18.5 | 30.4 |

[Table 6]

| number of days | capture rate (%) | | | |
|---|---|---|---|---|
| | formulation A | formulation B | formulation C | formulation D |
| 0 | 99.0 | 100.0 | 100.0 | 100.0 |
| 14 | 99.0 | 99.0 | 96.9 | 90.5 |

It was confirmed, from the results shown in Table 5, that the blending of trimethylglycine could maintain the gel remaining rate, namely the water remaining rate of the gel for a longer period.

It was confirmed, from the result shown in Table 6, that each formulation has a sufficient capturing ability.

The present invention has been described in detail and in specified embodiments, but the present invention is not limited to the foregoing embodiments but is subject to modifications and improvements in suitable manner. Also in the foregoing embodiments, the constituent elements are not restricted in material, shape, dimension, numerical values, form, number, position and the like so far as the objects of the present invention can be accomplished.

This application claims the benefit of Japanese Patent Application No. 2006-314632, filed November 21, 2006 and Japanese Patent Application No. 2006-318663, filed November 27, 2006, which are hereby incorporated by reference herein in their entirety.

**Claims**

1. A harmful insect trap (50) comprising:

    a container (51) having an aperture (56);
    a harmful insect attractant member (60) contained in the container (51) and containing a harmful insect attractant; and
    a plurality of gel bodies (54) contained in the container (51) in a layered state, between the aperture (56) and the harmful insect attractant member (60),

    wherein a gap enabling entry of a flying harmful insect is formed between the gel bodies (54) in the layered state.

2. The harmful insect trap according to claim 1,
    wherein the gel body has a size of from 5 to 25 mm.

3. The harmful insect trap according to claim 1 or 2,
    wherein a number of the gel bodies is from 50 to 200/100 cm$^3$.

4. A method for capturing a flying harmful insect by gel bodies (54), which comprises containing a harmful insect attractant member (60) and a plurality of gel bodies (54) in a container (51) having an aperture (56) on at least a surface thereof, forming a gel body layer that has a gap between the gel bodies, between the aperture and the harmful insect attractant member (60), and positioning the gel body layer in a path of the information equipment, that has entered from the aperture (56), toward the harmful insect attractant member (60) thereby capturing the flying harmful insect.

# FIG. 1

FIG. 2

## FIG. 3

# FIG. 4

# FIG. 5

## FIG. 6

Europäisches Patentamt

European Patent Office

Office européen des brevets

## EUROPEAN SEARCH REPORT

Application Number

EP 11 00 9700

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 2002 171889 A (EARTH CHEMICAL CO) 18 June 2002 (2002-06-18) * figure 4 * | 1-4 | INV. A01M1/14 A01M1/02 A01M1/20 A01N25/34 A01N51/00 A01N65/00 A01P19/00 |
| A | US 2004/001870 A1 (DURAND EMMA A [US] ET AL) 1 January 2004 (2004-01-01) * the whole document * | 1-4 | |
| A | US 5 139 864 A (LINDAUER JEROME I [US]) 18 August 1992 (1992-08-18) * the whole document * | 1-4 | |

TECHNICAL FIELDS SEARCHED (IPC)

A01M

The present search report has been drawn up for all claims

| Place of search | Date of completion of the search | Examiner |
|---|---|---|
| The Hague | 20 February 2012 | Nédélec, Morgan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT**
**ON EUROPEAN PATENT APPLICATION NO.** EP 11 00 9700

This annex lists the patent family members relating to the patent documents cited in the above-mentioned European search report.
The members are as contained in the European Patent Office EDP file on
The European Patent Office is in no way liable for these particulars which are merely given for the purpose of information.

20-02-2012

| Patent document cited in search report | | Publication date | Patent family member(s) | | Publication date |
|---|---|---|---|---|---|
| JP 2002171889 | A | 18-06-2002 | JP | 4756735 B2 | 24-08-2011 |
| | | | JP | 2002171889 A | 18-06-2002 |
| US 2004001870 | A1 | 01-01-2004 | US | 2004001870 A1 | 01-01-2004 |
| | | | US | 2005019361 A1 | 27-01-2005 |
| | | | US | 2006127436 A1 | 15-06-2006 |
| | | | US | 2006188539 A1 | 24-08-2006 |
| US 5139864 | A | 18-08-1992 | NONE | | |

EPO FORM P0459

For more details about this annex : see Official Journal of the European Patent Office, No. 12/82

**EP 2 436 264 A1**

## REFERENCES CITED IN THE DESCRIPTION

**Patent documents cited in the description**

- JP 2003070403 A
- JP 2002142643 A
- JP 2006314632 A
- JP 2006318663 A